# EUROPÄISCHE PATENTANMELDUNG

(11) **EP 4 102 094 A1**
(43) Veröffentlichungstag der Anmeldung: **14.12.2022**
(21) Anmeldenummer: 22175049.0
(22) Anmeldetag: 24.05.2022
(51) Int. Cl.: F16D 65/00

(54) **BREMSSTAUBPARTIKELFILTER, SCHEIBENBREMSENANORDNUNG, VERWENDUNG EINES FILTERS UND VERFAHREN ZUM FILTERN VON BREMSSTAUBBELADENER LUFT**

(30) Priorität: 09.06.2021 DE 102021114796
(71) Anmelder: MANN+HUMMEL GmbH, 71636 Ludwigsburg (DE)
(72) Erfinder: BOCK, Lukas, 74321 Bietigheim-Bissingen (DE); JESSBERGER, Thomas, 71679 Asperg (DE); KLINSER, Andreas, 71634 Ludwigsburg (DE); WELLER, Benedikt, 71711 Steinheim (DE); KÜMMERLING, Volker, 74321 Bietigheim-Bissingen (DE); EVLEKLI, Coskun, 71332 Waiblingen (DE); JURGENSON, Sören, 74226 Nordheim (DE); KELLER, Dr. Florian, 71640 Ludwigsburg (DE); WÖRZ, Tobias, 71397 Leutenbach (DE)
(74) Vertreter: Mann + Hummel Intellectual Property

(57) **Zusammenfassung**

Ein Bremsstaubpartikelfilter (1) für eine Scheibenbremsenanordnung (100) mit einer Bremsscheibe (2) und einem Bremssattel (4) umfasst:
ein Filtergehäuse (101, 201) mit einer ersten Seitenwand (111A, 211A) und einer zweiten gegenüberliegenden Seitenwand (111B, 211B), welche mit Hilfe eines zumindest teilumfänglich verlaufenden Umfangswandabschnitts (112A, 112B) und/oder einer Stirnwand (116, 216) miteinander verbunden sind, wobei sich ein Innenraum (120, 220) des Filtergehäuses (101, 201) von einer dem Bremssattel (4) zugewandten, insbesondere offenen, Seite entlang der Seitenwände (111A, 111B) und/oder des Umfangswandabschnitts (112A, 112B) zu der Stirnwand (116, 216) erstreckt;
wobei das Filtergehäuse (101, 201) im Innenraum (120, 220) mindestens eine luftdurchlässige Filterwand (118, 218) mit einem Filterwandumfangsabschnitt (118C) umfasst, welcher radial beabstandet zu dem Umfangswandabschnitt (112A, 112B) vorliegt und den Innenraum (120, 220) des Filtergehäuses (101, 201) in eine Rohluftseite (120A, 220A) und eine Reinluftseite (120B, 220B) unterteilt, wobei die Reinluftseite (120B, 220B) sich zwischen dem Filterwandumfangsabschnitt (118C) und dem Umfangswandabschnitt erstreckt.

## Beschreibung

### Technisches Gebiet

Die vorliegende Erfindung betrifft einen Bremsstaubpartikelfilter, welcher zum Rückhalten von Partikeln, die bei einem Bremsvorgang durch Abrieb an einer Bremsscheibe und/oder Bremsbelägen entstehen, geeignet ist. Ferner wird eine Scheibenbremsenanordnung, insbesondere für ein Kraftfahrzeug, mit einem Bremsstaubpartikelfilter vorgeschlagen. Weiter wird die Verwendung des Bremsstaubpartikelfilters zur Verringerung von Bremsstaubemissionen an Scheibenbremsen, sowie ein Verfahren zum Filtern von Bremsstaubpartikeln vorgeschlagen.

### Stand der Technik

Scheibenbremsen mit einem den Abrieb von Bremsbacken und Bremsscheiben aufnehmenden Filter in einem die Bremsscheibe umgreifenden Gehäuse sind aus der CH 675899 bekannt. Dort ist in ein mehrschichtiges Filtermedium, welches der außenbelüfteten Bremsscheibe zugewandt ist, eine Einlage mit Leitelementen zum Abführen des Abriebs in das Innere des Filtermediums eingebettet.

Die US 2010/0096226 beschreibt einen Filter für außenbelüftete Scheibenbremsen, bei dem seitlich der Bremsscheibe jeweils eine Verkleidung angebracht ist. Aus einem Spalt zwischen der Bremsscheibe und einer gegenüberliegenden nahen Seitenwand der Verkleidung wird mit Bremsstaub kontaminierte Luft durch ein in der Verkleidung parallel zur Bremsscheibe verlaufendes Filtermaterial gesogen.

Gattungsgemäße Bremsstaubpartikelfilter mit ringsegmentförmigen Filtergehäusen und nach innen ragenden Zungen zur Stützung des eingesetzten Filtermediums sind ferner aus der WO 2019/048374 bekannt.

### Offenbarung der Erfindung

Es ist eine Aufgabe der Erfindung, verbesserte Maßnahmen zur Reduktion von Bremsstaubemissionen an Scheibenbremsenanordnungen zur Verfügung zu stellen.

Gemäß einem ersten Aspekt wird Bremsstaubpartikelfilter für eine Scheibenbremsenanordnung mit einer Bremsscheibe und einem Bremssattel vorgeschlagen. Der Bremsstaubpartikelfilter umfasst:
ein Filtergehäuse mit einer ersten Seitenwand und einer zweiten gegenüberliegenden Seitenwand, welche mit Hilfe eines zumindest teilumfänglich verlaufenden Umfangswandabschnitts und/oder einer Stirnwand miteinander verbunden sind, wobei sich ein Innenraum des Filtergehäuses von einer dem Bremssattel zugewandten, insbesondere offenen, Seite entlang der Seitenwände und/oder des Umfangswandabschnitts zu der Stirnwand erstreckt;
wobei das Filtergehäuse im Innenraum mindestens eine luftdurchlässige Filterwand mit einem Filterwandumfangsabschnitt umfasst, welcher radial beabstandet zu dem Umfangswandabschnitt vorliegt und den Innenraum des Filtergehäuses in eine Rohluftseite und eine Reinluftseite unterteilt, wobei die Reinluftseite sich zwischen dem Filterwandumfangsabschnitt und dem Umfangswandabschnitt erstreckt. Der Filterwandumfangsabschnitt hat den Verlauf einer Zylindermantelfläche, deren Mittelachse insbesondere mit einer Drehachse der Bremsscheibe im Montagezustand zusammenfällt. Man könnte auch sagen, der Filterwandumfangsabschnitt bildet ein Zylindermantelflächensegment.

Das bei dem Bremsstaubpartikelfilter eingesetzte Filtergehäuse kann in Ausführungsformen ein ringsegmentförmiges, beispielsweise bananenförmiges oder helmförmiges Filtergehäuse sein. Der Innenraum des Filtergehäuses ist dabei der Bremsscheibe zugewandt.

Anhand der luftdurchlässigen Filterwand wird ein Strömungskanal erzeugt, der für einen definierten Druckgradienten zwischen Reinluftseite und Rohluftseite sorgt. Dadurch, dass die Filterwand einen Filterwandumfangsabschnitt umfasst, der radial beabstandet von den Umfangswandabschnitten angeordnet ist, kann eine effektive Filtrationsfläche der Filterwand vergrößert werden. Dadurch kann vorteilhaft der Abscheidegrad des Bremsstaubpartikelfilters erhöht werden.

Der vorgeschlagene Bremsstaubpartikelfilter ist für beliebige Anwendungen bei Scheibenbremsen geeignet. Dabei kann der Bremsstaubpartikelfilter für stationäre oder mobile Anwendungen verwendet werden. Als mobile Anwendungen kommen beispielsweise Kraftfahrzeuge, wie Pkw, Lkw, Busse, Schienenfahrzeuge oder dergleichen, in Frage. Stationär können Wellenbremsen, wie sie in Wind- oder Wasserkraftanlagen eingesetzt werden, mit entsprechenden Bremsstaubpartikelfiltern ausgestattet werden.

In Ausführungsformen des Bremsstaubpartikelfilters ist das Filtergehäuse eingerichtet, die Bremsscheibe zwischen den Seitenwänden über einen Ringsegmentabschnitt zu umschließen. Im Montagezustand des Bremsstaubpartikelfilters verläuft insbesondere eine Reibfläche der Bremsscheibe zwischen den Seitenwänden bzw. zwischen einer Seitenwand und der die Kammer abgrenzenden Zwischenwand. Man kann sagen, dass die Seitenwände und die Zwischenwand im Wesentlichen parallel zueinander verlaufen.

Der sich ergebende Ringsegmentabschnitt kann beispielsweise einen Winkelbereich von 90° oder mehr umfassen. In Ausführungsformen ergibt sich ein Ringsegmentwinkel von 40° bis 270°. Um den Bauraum, insbesondere bei einer Kfz-Bremsanordnung günstig auszunutzen, haben sich Ringsegmentwinkel zwischen 45° und 180° als geeignet erwiesen. Geeignete Ausführungsformen umfassen insbesondere einen Winkelbereich von 70° bis 130°, bevorzugt 80° bis 120°.

Die Filterwand umfasst den Filterwandumfangsabschnitt und ggf. weitere Abschnitte. Der Filterwandumfangsabschnitt erstreckt sich insbesondere parallel zu dem Umfangswandabschnitt. Der Umfangswandabschnitt kann auch Teil einer Umfangswand sein, der die zwei Seitenwände miteinander verbindet und im Montagezustand gegenüber einer Umfangskante der Bremsscheibe liegt. Der Filterwandumfangsabschnitt kann auch die zwei Seitenwände des Filtergehäuses miteinander verbinden. Der Filterwandumfangsabschnitt ist insbesondere derart im Filtergehäuse positioniert, dass er im Montagezustand der Umfangskante der Bremsscheibe gegenüberliegt. Insbesondere ist der Filterwandumfangsabschnitt im Montagezustand zwischen der Umfangskante der Bremsscheibe und dem Umfangswandabschnitt angeordnet. Der Filterwandumfangsabschnitt und/oder die gesamte Filterwand kann sich entlang der gesamten Umfangslänge des Filtergehäuses erstrecken.

Der Abstand zwischen dem Filterwandumfangsabschnitt und dem Umfangswandabschnitt kann dabei konstant sein oder variieren. Durch definierte Abstände zwischen dem Filterwandumfangsabschnitt und dem Umfangswandabschnitt können Drücke variiert werden, um die Filtrationsleistung des Bremsstaubpartikelfilters zu optimieren.

Gemäß einer Ausführungsform hat die Filterwand zumindest einen Seitenabschnitt, der gegenüber einer der Seitenwände axial versetzt angeordnet ist, wobei die Reinluftseite sich ferner zwischen der einen der Seitenwände und dem Seitenabschnitt erstreckt.

Insbesondere erstreckt sich die Filterwand nicht ausschließlich gegenüber der Umfangswandabschnitte, sondern auch gegenüber der ersten und/oder zweiten Seitenwand. Dadurch wird die Gesamtfilterfläche vergrößert und der Abscheidegrad wird verbessert.

Der Seitenabschnitt (bzw. die Seitenabschnitte) der Filterwand erstreckt sich insbesondere senkrecht von dem Filterwandumfangsabschnitt. Zwischen dem Seitenabschnitt der Filterwand und der gegenüberliegenden Seitenwand kann ein vorbestimmter Abstand vorliegen, der eine zum Beispiel offene Kammer für die Reinluft bildet. Die Kammer ist beispielsweise durch den Seitenabschnitt, die gegenüberliegende Seitenwand, die Stirnwand, den Filterwandumfangsabschnitt und/oder den Umfangswandabschnitt (oder die Umfangswand) gebildet. Ein Abstand zwischen dem Seitenabschnitt und der gegenüberliegenden Seitenwand kann konstant sein oder variieren. Durch definierte Abstände zwischen dem Seitenabschnitt und der gegenüberliegenden Seitenwand können Drücke variiert werden, um die Filtrationsleistung des Bremsstaubpartikelfilters zu optimieren. Die Filterwand ist insbesondere einteilig mit ihren Seitenabschnitten gebildet.

Falls die Filterwand sowohl einen sich gegenüber von der ersten Seitenwand als auch einen sich gegenüber von der zweiten Seitenwand erstreckenden Seitenabschnitt aufweist, hat die Filterwand im Schnitt insbesondere eine U-Form.

Gemäß einer weiteren Ausführungsform weist das Filtergehäuse zwei Umfangswandabschnitte auf, wobei ein erster Umfangswandabschnitt sich axial von der ersten Seitenwand in Richtung der zweiten Seitenwand erstreckt und ein mit dem ersten Umfangswandabschnitt fluchtender zweiter Umfangswandabschnitt sich axial von der zweiten Seitenwand in Richtung der ersten Seitenwand erstreckt.

Bei dem radial äußeren Umfangswandabschnitt kann man auch von einer Mantelfläche eines ringsegmentförmigen Filtergehäuses sprechen.

Gemäß einer weiteren Ausführungsform hält die luftdurchlässige Filterwand ein Filtermedium. Die Filterwand ist insbesondere vollflächig mit dem Filtermedium bedeckt. Die Filterwand umfasst bevorzugt ein luftdurchlässiges Gitter.

Es ist denkbar, ein Filtermedium im Filtergehäuse, insbesondere an der Filterwand, vorzusehen, welches aus einem Material gefertigt ist, das den verhältnismäßig hohen Temperaturen bei einem Scheibenbremsvorgang widerstehen kann. Das Filtermedium ist geeignet, Bremsstaubpartikel zu binden oder zurückzuhalten.

Beispielsweise umfasst das Filtermedium ein flächiges Material mit Metallfasern, Glasfasern, Keramikfasern und/oder temperaturbeständigen Kunststoffen. Vorzugsweise ist das eingesetzte Filtermaterial bei typischen Betriebstemperaturen von Scheibenbremsanordnungen, beispielsweise zwischen -20°C und 700°C, beständig. Bekannt sind Metallfaservliese, die als Filtermaterial eingesetzt werden können. Das luftdurchlässige Gitter (auch "Käfig") kann dazu dienen, das Filtermedium zu tragen. Dadurch kann dem Filtermedium Stabilität verliehen werden. Ferner kann das Gitter die genaue Form des Filtermediums und somit der Filterwand vorschreiben. So kann die Form der Filterwand mit geringem Aufwand an die Umgebung und/oder an das Filtergehäuse angepasst werden.

Gemäß einer weiteren Ausführungsform ist das Filtermedium an einer und/oder an beiden Seiten des Gitters angebracht. Das Anbringen erfolgt zum Beispiel durch eine lokale Klebeverbindung.

Gemäß einer weiteren Ausführungsform weist das Filtermedium eine Eigensteifigkeit auf, die insbesondere durch ein partielles Sintern des Filtermediums entsteht. Wenn das Filtermedium eine Eigensteifigkeit aufweist, kann insbesondere auf das Gitter verzichtet werden, weil das Filtermedium sich von alleine trägt.

Gemäß einer weiteren Ausführungsform weist der Umfangswandabschnitt (oder die Umfangswand) und/oder eine der Seitenwände zumindest eine Öffnung auf, die einen Austritt der Luft aus der Reinluftseite nach außerhalb des Filtergehäuses ermöglicht.

Solch eine Öffnung (Ausströmöffnung) dient insbesondere dazu, einen Überdruck auf der Reinluftseite zu verhindern. Die Öffnung kann sich zum Beispiel an einer Mantelseite des Gehäuses zwischen fluchtenden Umfangswandabschnitten und/oder an einer der Seitenwände befinden.

Gemäß einer weiteren Ausführungsform weist das Filtergehäuse eine Schutzwand auf, die sich von einer der Seitenwände und/oder der Umfangswand erstreckt und derart orientiert ist, dass sie die durch die Öffnung austretende Luft umleitet, insbesondere durch ein Labyrinth umleitet.

Die Schutzwand dient insbesondere dazu zu verhindern, dass Wasser durch die Öffnung auf die Reinluftseite der Filterwand gelangt. Dies ist zum Beispiel deshalb unerwünscht, weil eine unerwünschte Auswaschung erfolgen könnte. Ferner kann die Schutzwand verhindern, dass Dreck von außerhalb an die Reinluftseite der Filterwand gelangt und diese verstopft, was negative Auswirkungen auf die Filterkapazität hätte.

Eine Umleitung der Luft durch ein Labyrinth bedeutet insbesondere, dass die Schutzwand einen Luftauslasskanal bildet, in dem die Luft mehrere Male umgelenkt wird. Dadurch wird ein Eintreten von Dreck und Wasser durch den Luftauslasskanal erschwert.

Gemäß einer weiteren Ausführungsform ist die Schutzwand ein Teil einer der Seitenwände und/oder des Umfangswandabschnitts, der angewinkelt ist. Die Schutzwand ist zum Beispiel einteilig mit einer der Seitenwände und/oder dem Umfangswandabschnitt gebildet. Dadurch wird die Herstellung des Filtergehäuses mit Schutzwand vereinfacht. Die Schutzwand bildet insbesondere eine von der Seitenwand und/oder dem Umfangswandabschnitt abstehenden Schürze, die die Öffnungen von außerhalb bedeckt. Die Schutzwand verläuft beispielsweise außerhalb der Wände des Filtergehäuses und ist beabstandet zu diesen angeordnet.

Gemäß einer weiteren Ausführungsform ist die Öffnung in einem Benutzungszustand bzw. Montagezustand des Bremsstaubpartikelfilters an einer Scheibenbremsenanordnung nach unten gerichtet angeordnet.

Gemäß einer weiteren Ausführungsform ist das Filtermedium ein flächiges Material mit Metallfasern, Glaskeramik und/oder temperaturbeständigen Kunststoffen und/oder ist aus einem faltenlosen Medium gebildet.

Gemäß einer weiteren Ausführungsform ist/sind zumindest eine der Seitenwände und/oder die Umfangswand luftdicht ausgeführt. Dadurch wird zum einen ein Druckgradient ermöglicht und zum anderen verhindert, dass Schmutz und/oder Wasser von außerhalb an die Reinluftseite gelangt.

Gemäß einer weiteren Ausführungsform weist das Filtergehäuse eine Umfangswand auf, die den Umfangswandabschnitt umfasst, wobei die Umfangswand die erste und die zweite Seitenwand miteinander verbindet, wobei die Filterwand der Umfangswand zumindest teilweise gegenüberliegt, und wobei die Reinluftseite als eine Kammer ausgebildet ist, welche von der Filterwand und der Umfangswand begrenzt ist.

Falls die Filterwand ferner Seitenabschnitt(e) umfasst, erstreckt sich die Kammer ferner entlang der Seitenabschnitt(e), zwischen einem jeweiligen Seitenabschnitt und der gegenüberliegenden Seitenwand.

Gemäß einer weiteren Ausführungsform weist das Filtergehäuse zumindest einen sich von einer Seitenwand erstreckenden Befestigungsabschnitt auf, der dem Umfangswandabschnitt gegenüber angeordnet ist, wobei die Filterwand mittelbar oder unmittelbar mittels des Befestigungsabschnitts herausnehmbar an dem Filtergehäuse gehalten ist, insbesondere anhand eines Umfangsführungskanals des Befestigungsabschnitts.

Die Filterwand ist insbesondere als Ganzes aus dem Filtergehäuse herausnehmbar und austauschbar. Dies ist zum Beispiel vorteilhaft, weil die Filterwand durch eine neue Filterwand ersetzt werden kann, wenn die Filterkapazität des Filtermediums aufgrund der Nutzung abgenommen hat. Insbesondere ist es nicht notwendig, das gesamte Filtergehäuse auszutauschen; es genügt vielmehr, die Filterwand zu ersetzen.

Gemäß einer weiteren Ausführungsform weist der Befestigungsabschnitt einen sich radial von zumindest einer Seitenwand in Axialrichtung zu dem Innenraum erstreckenden Innenumfangswandabschnitt auf, der endständig den Umfangsführungskanal aufweist, wobei der Umfangsführungskanal bevorzugt als eine Umformung, insbesondere Bördelung, des Innenumfangswandabschnitts vorliegt.

Durch einen derart gebildeten Umfangsführungskanal kann die Filterwand mit geringem Aufwand in das Filtergehäuse eingeschoben und befestigt werden und/oder entfernt werden.

Gemäß einem zweiten Aspekt wird eine Scheibenbremsenanordnung mit einer Bremsscheibe, einem Bremssattel und einem Bremsstaubpartikelfilter gemäß dem ersten Aspekt und/oder gemäß einer Ausführungsform des ersten Aspekts vorgeschlagen, wobei das Filtergehäuse die Bremsscheibe in axialer Richtung überspannt.

Das Filtergehäuse überdeckt dabei wenigstens abschnittsweise eine Reibfläche der Bremsscheibe in radialer Richtung entlang der Umfangsrichtung. Die Bremsscheibenanordnung kann ferner einen oder mehrere an dem Bremssattel angeordnete Bremsbeläge aufweisen.

Beim Bremsvorgang entstehen Bremsstaubpartikel im Wesentlichen an der Reibfläche und an den auf diese einwirkenden Bremsbeläge. Daher ist der Bremsstaubpartikelfilter mit seinem Filtergehäuse an der offenen Seite möglichst nahe an den Bremssattel angeordnet. Es ergibt sich beispielsweise eine Montagesituation, in der die Umfangwand einer Bremsscheibenkante gegenüber verläuft.

Die für den vorgeschlagenen Bremsstaubpartikelfilter beschriebenen Ausführungsformen und Merkmale gelten für die vorgeschlagene Scheibenbremsenanordnung entsprechend.

Gemäß einer Ausführungsform verläuft der Umfangswandabschnitt (oder die Umfangswand) einer Bremsscheibenumfangskante gegenüberliegend.

Gemäß einer weiteren Ausführungsform ist die Bremsscheibe eine innenbelüftete Bremsscheibe, welche eine Bremsscheibenumfangsfläche mit radialen Ausströmöffnungen zum radialen Ausströmen von Luft aufweist. Im Inneren der Bremsscheibe verlaufen Luftkanäle zur Kühlung der Bremsscheibe, sodass die erhitzte kühlende Luft an den Ausströmöffnungen im Wesentlichen radial austritt. Es kann von Vorteil sein, die Umfangswand gegenüber der Bremsscheibenkante (bei außenbelüfteten Bremsscheiben) oder gegenüber den radialen Ausströmöffnungen luftdicht auszuführen.

Gemäß einem dritten Aspekt wird eine Verwendung des Bremsstaubpartikelfilters gemäß dem ersten Aspekt oder gemäß einer Ausführungsform des ersten Aspekts zum Filtern von mit Bremsstaubpartikeln beladener Luft in oder an einer Scheibenbremsenanordnung vorgeschlagen. Die Verwendung des Bremsstaubpartikelfilters ist insbesondere für Kraftfahrzeuge im Stadtverkehr geeignet. Es kommen sowohl Scheibenbremsenanordnungen in elektrisch oder hybridbetriebenen Fahrzeugen, wie auch in Fahrzeugen mit Verbrennungsmotor in Frage. Ebenso können Bremsstaubpartikelfilter in oder an Scheibenbremsenanordnungen von Schienenfahrzeugen, wie Zügen oder Straßenbahnen, Verwendung finden.

Die für den vorgeschlagenen Bremsstaubpartikelfilter beschriebenen Ausführungsformen und Merkmale gelten für die vorgeschlagene Verwendung entsprechend.

Gemäß einem vierten Aspekt wird ein Verfahren zum Filtern von mit Bremsstaubpartikeln beladener Luft in oder an einer Scheibenbremsenanordnung, welche eine in einer Drehrichtung drehbaren Bremsscheibe, einen die Bremsscheibe im Bereich einer Reibfläche umgreifenden Bremssattel, und mindestens einen Bremsbelag aufweist, insbesondere mit Hilfe eines Bremsstaubpartikelfilters gemäß dem ersten Aspekt oder gemäß einer Ausführungsform des ersten Aspekts, vorgeschlagen. Das Verfahren umfasst:
in einem in der Drehrichtung dem Bremssattel nachgelagerten Filtergehäuse, welches die Bremsscheibe randseitig und umfangsseitig umgreift:
Führen eines Luft-Bremsstaubpartikelstroms zunächst in Umfangsrichtung entlang einer Reibfläche der Bremsscheibe;
Führen des Luft-Bremsstaubpartikelstroms durch das Filtermedium der Filterwand von der Rohluftseite zur Reinluftseite;
Aufnehmen der Bremsstaubpartikel des Luft-Bremsstaubpartikelstroms durch das durchströmte Filtermedium.

Die für den vorgeschlagenen Bremsstaubpartikelfilter beschriebenen Ausführungsformen und Merkmale gelten für das vorgeschlagene Verfahren entsprechend.

Gemäß einer Ausführungsform umfasst das Verfahren ferner: Führen des Luft-Bremsstaubpartikelstroms durch das Filtermedium der Filterwand von der Rohluftseite zur Reinluftseite basierend auf einem definierten Druckgradienten zwischen der Rohluftseite und der Reinluftseite.

Gemäß einer Ausführungsform umfasst das Verfahren ferner: Auslassen der gefilterten Luft aus der Reinluftseite durch eine Öffnung in der Umfangswand und/oder in einer der Seitenwände.

Die für den Bremsstaubpartikelfilter beschriebenen Merkmale gelten für die Scheibenbremsenanordnung sowie das Fahrzeug entsprechend. Merkmale bezüglich der Verwendung des Bremsstaubpartikelfilters oder des Verfahrens zum Filtern von mit Bremsstaubpartikeln beladener Luft sind insbesondere funktionell auf die Eigenschaften des Bremsstaubpartikelfilters übertragbar.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

- Fig. 1:: eine perspektivische Ansicht einer Ausführungsform einer Scheibenbremsenanordnung;
- Fig. 2:: eine seitliche Draufsicht der Scheibenbremsenanordnung gemäß Fig. 1;
- Fig. 3:: eine Schnittansicht der Scheibenbremsenanordnung gemäß der Fig. 1;
- Fig. 4:: eine weitere Schnittansicht der Scheibenbremsenanordnung gemäß der Fig. 1;
- Fig. 5:: eine seitliche Draufsicht einer Ausführungsform eines Filtergehäuses eines Bremsstaubpartikelfilters für eine Scheibenbremsenanordnung gemäß der Fig. 1 - 4;
- Fig. 6:: eine perspektivische Ansicht des Filtergehäuses gemäß Fig. 5;
- Fig.7:: eine perspektivische Ansicht einer ersten Ausführungsform eines Filtergehäuses eines Bremsstaubpartikelfilters für eine Scheibenbremsenanordnung;
- Fig. 8:: eine seitliche Draufsicht des Filtergehäuses gemäß Fig. 7;
- Fig. 9:: eine Schnittansicht des Filtergehäuses gemäß Fig. 7;
- Fig.10:: eine perspektivische Ansicht einer zweiten Ausführungsform eines Filtergehäuses eines Bremsstaubpartikelfilters für eine Scheibenbremsenanordnung;
- Fig. 11:: eine Schnittansicht des Filtergehäuses gemäß Fig. 10;
- Fig. 12:: eine perspektivische Ansicht einer Filterwand für das Filtergehäuse gemäß Fig. 10;
- Fig. 13:: eine perspektivische Ansicht eines Einführprozesses der Filterwand gemäß Fig. 12 in das Filtergehäuse gemäß Fig. 10;
- Fig. 14:: eine Schnittansicht einer Abwandlung des Filtergehäuses gemäß Fig. 10; und
- Fig. 15:: eine Schnittansicht einer Abwandlung des Filtergehäuses gemäß Fig. 7.

In den Figuren sind gleiche oder funktionsgleiche Elemente, sofern nichts anderes angegeben ist, mit denselben Bezugszeichen versehen worden.

### Ausführungsform(en) der Erfindung

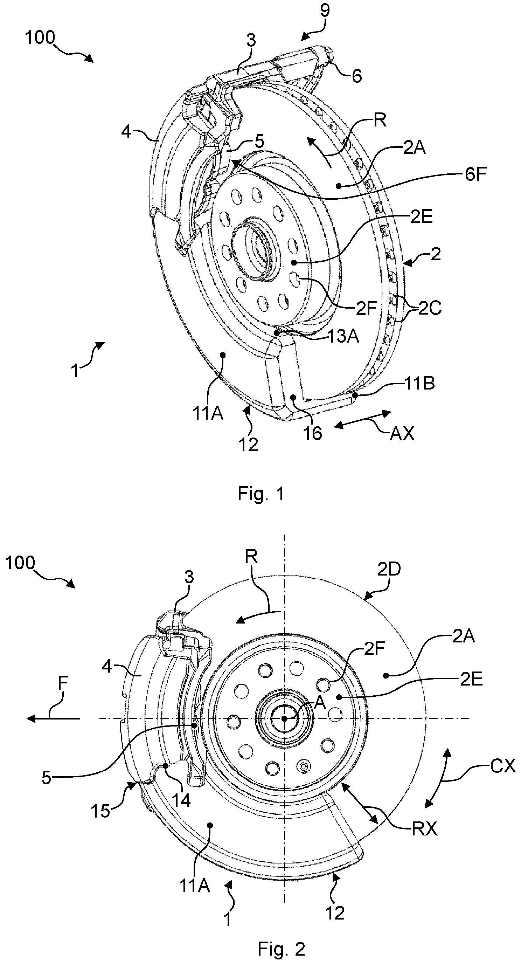

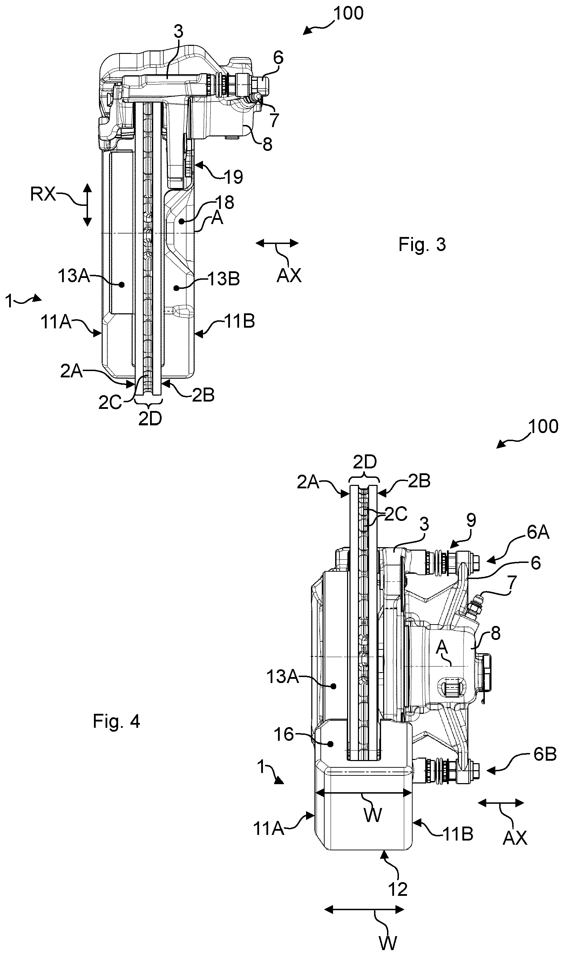

In den Fig. 1, 2, 3 und 4 sind verschiedene Ansichten einer Ausführungsform einer Scheibenbremsenanordnung, beispielsweise für ein Kraftfahrzeug, dargestellt. Dabei ist in der Fig. 1 eine perspektivische Ansicht der Scheibenbremsenanordnung 100, in der Fig. 2 eine seitliche Ansicht und in den Fig. 3 und 4 Schnittansichten parallel zur Drehachse A gezeigt.

Die Scheibenbremsenanordnung 100 umfasst eine Bremsscheibe 2, die in der dargestellten Ausführungsform mit einer Innenbelüftung ausgestattet ist. Die Bremsscheibe 2 hat einen radial innen liegenden Befestigungsteller 2E, der Befestigungsöffnungen 2F aufweist. In den Figuren ist jeweils nur eine Öffnung 2F mit Bezugszeichen versehen. Über dem Befestigungsteller 2E und die Befestigungsöffnungen 2F wird die Bremsscheibe 2 mithilfe geeigneter Befestigungsmittel, wie beispielsweise Radschrauben, an die Radaufhängung befestigt, sodass eine verdrehsichere Kopplung mit dem hier nicht dargestellten Fahrzeugrad bzw. den Felgen entsteht. An der umlaufenden Bremsscheibenkante 2D (vgl. Fig. 3) erkennt man radial nach außen gerichtete Ausströmöffnungen 2C. Aus den Ausströmöffnungen 2C strömt beim Betrieb der Bremse, die in Drehrichtung R rotiert, Luft zur Kühlung der Bremsscheiben 2. Zur Vereinfachung wird im Folgenden ein Bremsvorgang bei einer Vorwärtsfahrt betrachtet. Grundsätzlich lässt sich die Drehrichtung jedoch auch umkehren.

In den Figuren ist eine Vorwärtsdrehrichtung R entgegen dem Uhrzeigersinn angedeutet. Diese wird im Weiteren als Vorwärtsdrehrichtung R bezeichnet. Die Drehachse A erkennt man in den Fig. 2, 3 und 4. Durch die Orientierung der Bremsscheibe 2 ergibt sich eine axiale Erstreckungsrichtung AX (vgl. Fig. 1, 3 und 4), eine radiale Erstreckungsrichtung RX (vgl. Fig. 3) und eine umfängliche Erstreckungsrichtung CX (vgl. Fig. 2).

In der Fig. 2 ist im Wesentlichen eine Einbausituation der Bremsscheibe 2 und einen die Bremsschreibe 2 umgreifenden Bremssattel 4 angedeutet. Der Bremssattel 4 ist an einen Bremssattelhalter 3 gekoppelt, der ebenfalls die Bremsscheibe 2 umgreift. An dem Bremssattel 4 sind beidseitig der Bremsscheibe 2 Bremsbeläge 5 angeordnet, die mit Hilfe einer Bremshydraulik 8 (vgl. Fig. 3 und 4) beim Bremsvorgang auf die Reibflächen 2A, 2B gedrückt werden.

Der Bremssattelhalter 3 sowie der Bremssattel 4 werden über eine schwimmende Lagerung 9 von einem Bremssattelträger 6 gehalten. Durch eine schwimmende Lagerung 9 erfolgt eine automatische Zentrierung des Bremssattels 4 mit den Bremsbelägen 5 bezogen auf die Bremsscheibe 2, die zwischen den Greifarmen des Bremssattels 4 bzw. den beiden Bremsbelägen 5 liegt. In der dargestellten Ausführungsform ist der Bremssattel 4 in Vorwärtsrichtung F vor der Drehachse A angeordnet. Es sind auch Varianten denkbar, in denen der Bremssattel 4 hinter der Achse A vorgesehen ist.

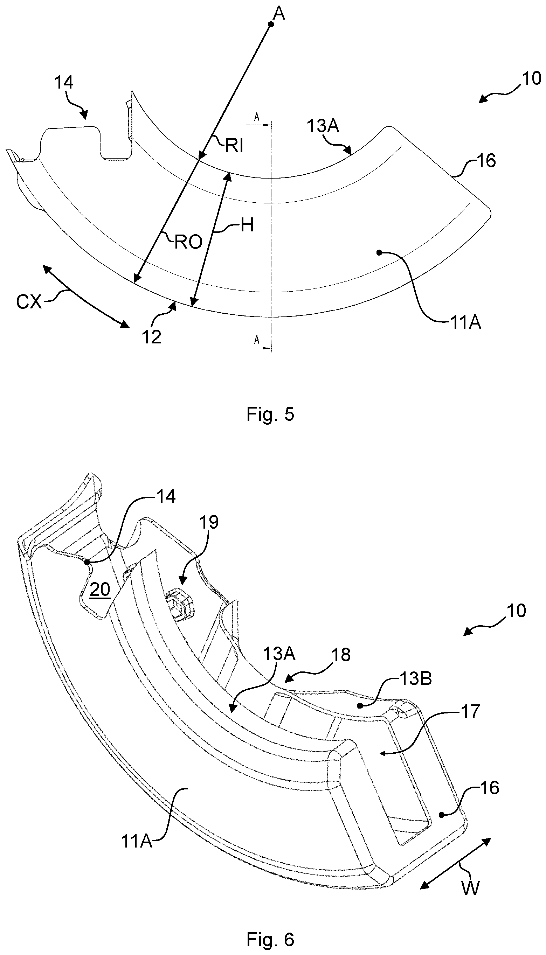

Da beim Bremsvorgang die Bremsbeläge 5 auf die Reibflächen 2A, 2B der Bremsscheibe 2 drücken, entsteht ein Abrieb an den Bremsbelägen 5 und grundsätzlich auch an der Bremsscheibe 2. Ein Teil dieser Bremsstaubpartikel werden durch die Rotation R der Bremsscheibe in Umfangsrichtung CX mitgerissen. Daher ist zum Auffangen dieses Bremsstaubs oder der Bremsstaubpartikel ein Bremsstaubpartikelfilter 1 in Drehrichtung R nach dem Bremssattel 4 vorgesehen. Detaillierte Seitenansichten und perspektivische Darstellungen des Filtergehäuses 10 des Bremsstaubpartikelfilters 1 sind in den Fig. 5 und 6 wiedergegeben.

Das Gehäuse 10 des Bremsstaubpartikelfilters 1 umgreift einen Bereich der Bremsscheibe 2 im Wesentlichen ringsegmentförmig. Dazu weist der Bremsstaubpartikelfilter 1 ein Gehäuse 10 auf. Das Gehäuse 10 hat zwei gegenüberliegende Seitenwände 11A, 11B, die über eine äußere Umfangswand 12 miteinander zu einem etwa U-förmigen Querschnitt verbunden sind. In der Orientierung der Fig. 1, 3 und 4 ergibt sich eine äußere Seitenwand 11A, die im Montagezustand vom Fahrzeug wegweist. Die gegenüberliegende Seitenwand 11B (in der Orientierung der Fig. 3 und 4 rechtsseitig) wird als innere Seitenwand 11B bezeichnet, da sie zum Fahrzeuginneren weist. Die Bremsscheibe 2 zwischen den beiden Seitenwänden 11A, 11B ist somit teilweise eingehaust.

In radialer Richtung gegenüber der Umfangswand 12 verlaufen innere Umfangskantenabschnitt 13A, 13B. Der außen liegende, radial innen liegende und axial außen liegende Umfangskantenabschnitt ist mit 13A bezeichnet. Der radial innen liegende und axial innen liegende Umfangskantenabschnitt ist mit 13B bezeichnet.

Das Filtergehäuse 10 hat zum Bremssattel 4 hin eine Kante mit einer Anschlusskontur 14, so dass zwischen dem Bremssattel 4 und der Gehäusekante bzw. Anschlusskontur 14 ein Spalt 15 vorliegt. Die Gehäusekante 14 bildet eine bremssattelseitige Öffnung des Filtergehäuses 10. Das Filtergehäuse 10 erstreckt sich in Umfangsrichtung CX von der Anschlusskontur bzw. einer geöffneten Seite 14 des Gehäuses10 hin bis zu einer Stirnwand 16. Die Stirnwand 16 verbindet die äußere Seitenwand 11A, die äußere Umfangswand 12 und die innere Seitenwand 11B miteinander. Zwischen den inneren Umfangskantenabschnitten 13A, 13B liegt ein ringförmiger Schlitz 17 vor, in den die Bremsscheibe 2 mit ihrer Bremsscheibenkante 2D eingeführt werden kann. Die Gehäusewände 11A, 11B, 12, 13A, 13B, 16 umschließen einen Gehäuseinnenraum 20. In den Gehäuseinnenraum 20 dringt die Bremsscheibe 2 ein bzw. das Filtergehäuse 10 umschließt oder umfasst ein Ringsegment der Bremsscheibe 2. Das Filtergehäuse 10 oder Einbauten im Bremsstaubpartikelfilter 1 berühren die Bremsscheibe 2 nicht.

In der Fig. 5 sind mögliche Bemaßungen des Filtergehäuses 10 illustriert. Die Fig. 5 zeigt eine Seitenansicht von der Außenseite der Scheibenbremsenanordnung 100 in axialer Richtung. Man erkennt, dass die Seitenwände, insbesondere die in der Fig. 5 sichtbare äußere Seitenwand 11A, eine Ringsegmentform hat. Das Filtergehäuse 10 wird von der Drehachse A gesehen radial innen durch die inneren Umfangskantenabschnitte 13A, 13B (nicht gezeigt) begrenzt und radial außen durch die äußere Umfangswand 12. Dabei kann sich ein Innenradius RI durch den Abstand den inneren Umfangskantenabschnitten 13A, 13B ergeben und ein äußerer Radius RO durch den Abstand der Umfangswand 12 von der Drehachse A. Die Differenz der Radien RO - RI kann als Höhe H des Filtergehäuses 10 bezeichnet werden. Die Länge des Filtergehäuses ergibt sich durch die Erstreckung entlang des Umfangs zwischen der dem Bremssattel 4 zugewandten offenen Seite 14 und der Stirnseite 16. Eine Breite W des Filtergehäuses 10 ergibt sich in seiner axialen Erstreckung durch den Abstand zwischen den beiden Seitenwänden 11A, 11B (vgl. Fig. 4 und 6).

Beim Betrieb der Scheibenbremsenanordnung 100 und des Bremsstaubpartikelfilters 11 wird durch die Rotation R der Bremsscheibe 2 ein Luftstrom in Umfangsrichtung CX durch das Filtergehäuse 10 entlang der Drehrichtung R der Bremsscheibe 2 erzeugt.

Im Inneren 20 des Filtergehäuses 10 können sich die Partikel entlang dem Strömungsweg im Filtergehäuse 10 durch Adhäsionskräfte an die Innenwände niederschlagen oder (hier nicht gezeigt) von geeigneten Filtermaterialien gebunden werden.

Das Filtergehäuse 10 bzw. der Bremsstaubpartikelfilter 1 ist mit einem geeigneten Befestigungsmittel, beispielsweise einer Schraube, an dem Bremssattelhalter 3 befestigt. Man erkennt in den Fig. 3 und 6 Befestigungsmittel 19.

Der Bauraum im Bereich der Scheibenbremsenanordnung 100 insbesondere bei einer gelenkten Vorderachse eines Fahrzeugs kann Einfluss auf die Gehäuseform des Bremsstaubpartikelfilters 1 haben. Beispielsweise hat das Filtergehäuse 10 axial innenseitig einen in Richtung zum Inneren 20 des Filtergehäuses 10 gezogenen Bereich 18 zwischen der Stirnseite 16 und der Anschlusskontur 14. Insofern ergibt sich entlang der Umfangsrichtung CX eine veränderliche Breite des Querschnitts des Filtergehäuses 10.

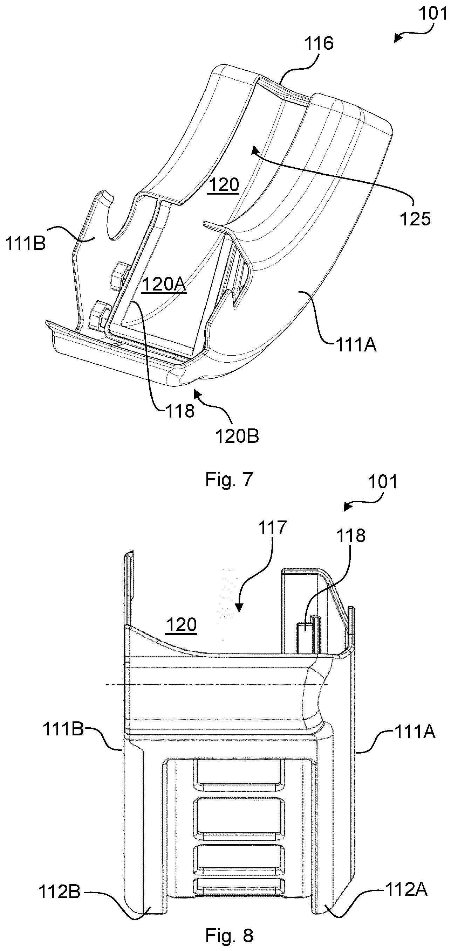

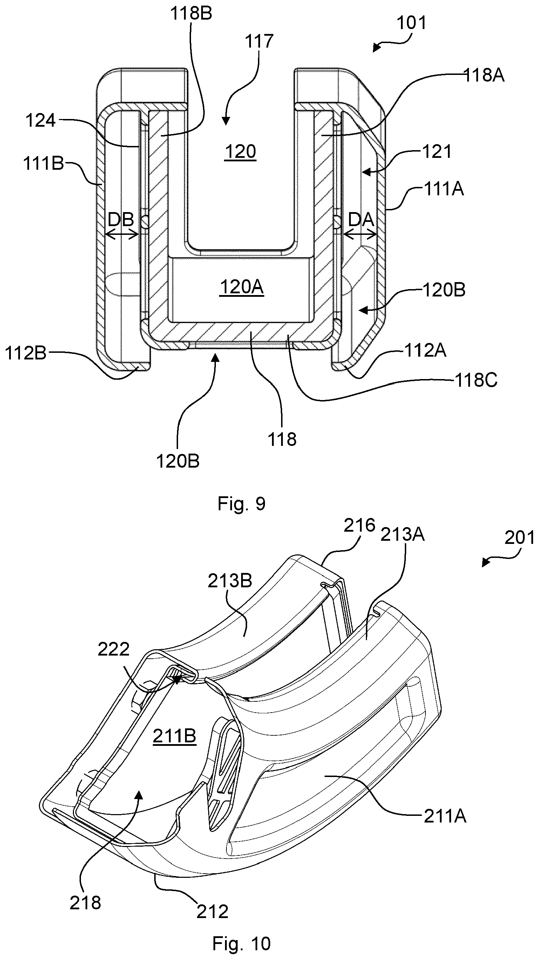

In den Fig. 7 bis 15 sind einige Aspekte des eingesetzten Filtergehäuses 10 für Ausführungsformen von Bremsstaubpartikelfiltern erläutert. Die im Weiteren dargestellten Filtergehäuse oder Bremsstaubpartikelfilter sind zum Einsatz in Scheibenbremsenanordnungen 100, wie zuvor beschrieben, vorgesehen. Die im Weiteren verwendeten Bezugszeichen entsprechen den zu den Fig. 1 bis 6 erläuterten Elementen der Scheibenbremsenanordnung und des Bremsstaubpartikelfilters, wobei auf die jeweiligen Bezugszeichen 100 oder 200 addiert wurde. Beispielsweise entspricht die Stirnwand 116 des Filtergehäuses 101 aus Fig. 7 der Stirnwand 16, wie sie in den Fig. 1 bis 6 benannt ist. Die Stirnwand 216 des Filtergehäuses 201 aus Fig. 10 entspricht der Stirnwand 16, wie sie in den Fig. 1 bis 6 benannt ist. Insofern werden Scheibenbremsanordnungen gezeigt, die mit Bremsstaubpartikelfiltern 1 gemäß der folgenden Figuren ausgestattet sind.

Die Fig. 7 bis 9 zeigen eine erste Ausführungsform eines Filtergehäuses 101 eines Bremsstaubpartikelfilters 1 für eine Scheibenbremsenanordnung 100. Das Filtergehäuse 101 umfasst anstelle der zuvor beschriebenen axial durchgehenden Umfangswand 12 lediglich umfangswandabschnitte 112A, 112B, die entlang der Umfangsrichtung CX fluchtend miteinander von den Seitenwänden 111A, 111B in Richtung des Innenraums 120 abstehen.

Im Innenraum 120 des Gehäuses 101 ist eine Filterwand 118 angeordnet, die beabstandet zu den einzelnen Wänden 111A, 111B, 112A, 112B des Gehäuses 101 verläuft. Wie in der Fig. 9 gezeigt, ist die Filterwand 118 im Schnitt U-förmig. Sie umfasst einen Filterwandumfangsabschnitt 118C, der sich entlang der Umfangsrichtung CX erstreckt. Im Montagezustand ist der Filterwandumfangsabschnitt 118C gegenüber von der Bremsscheibenkante 2D angeordnet. Zwischen dem Filterwandumfangsabschnitt 118C und der Bremsscheibenkante 2D liegt entlang der Radialrichtung RX ein Abstand, der zwischen 0,5 und 2cm beträgt.

Die Filterwand 118 umfasst ferner zwei Seitenabschnitte 118A, 118B, die sich im Wesentlichen senkrecht von dem Filterwandumfangsabschnitt 118C radial erstrecken. Der erste Seitenabschnitt 118A ist gegenüber von der ersten Seitenwand 111A angeordnet, sodass zwischen der ersten Seitenwand 111A und dem ersten Seitenabschnitt 118A ein konstanter axialer Abstand DA liegt. Der zweite Seitenabschnitt 118B ist gegenüber von der zweiten Seitenwand 111B angeordnet, sodass zwischen der zweiten Seitenwand 111B und dem zweiten Seitenabschnitt 118B ein konstanter axialer Abstand DB liegt.

Die Filterwand 118 umfasst ein Gitter 124 und ein Filtermedium 125, das auf einer Innenseite des Gitters 124, die der Bremsscheibe 2 gegenüberliegt, angeklebt ist. Das Filtermedium 125 dient der Aufnahme von Bremsstaubpartikeln, die sich in der Luft befinden, die um die Bremsscheibe 2 strömt. Die Filterwand 118 dient somit der Abgrenzung zwischen einer Rohluftseite 120A und einer Reinluftseite 120B des Innenraums 120. Die Reinluftseite 120B wird durch eine offene Kammer 121 gebildet, die sich zwischen der Filterwand 118 und den Gehäusewänden 111A, 111B, 112A und 112B erstreckt.

Die Abstände DA, DB zwischen der Filterwand 118 und den Gehäusewänden111A, 111B, 112A, 112B führen zu einem vorteilhaften Druckgradienten zwischen der Rohluftseite 120A und der Reinluftseite 120B. Dadurch wird der Luftstrom durch die Filterwand 118 geführt und effizient gefiltert. Durch das freistehende Filtermedium 125 der Filterwand 118 wird ferner eine absolute Filterfläche erhöht, wodurch die Filterung der Bremsstaubpartikel aus dem Luftstrom ferner optimiert werden kann.

Obwohl die Fig. 7 bis 9 eine Ausführungsform zeigen, in der die Filterwand 118 zwei Seitenabschnitte 118A, 118B umfasst, ist es auch denkbar, einen der Seitenabschnitte 118A, 118B oder beide Seitenabschnitte 118A, 118B wegzulassen.

Die Fig. 10 bis 13 zeigen eine zweite Ausführungsform eines Filtergehäuses 201 für eine Scheibenbremsenanordnung 100. Das Filtergehäuse 201 umfasst im Unterschied zum Gehäuse 101 aus der ersten Ausführungsform eine axial durchgehende Umfangswand 212. Ansonsten sind die beiden Ausführungsformen größtenteils identisch.

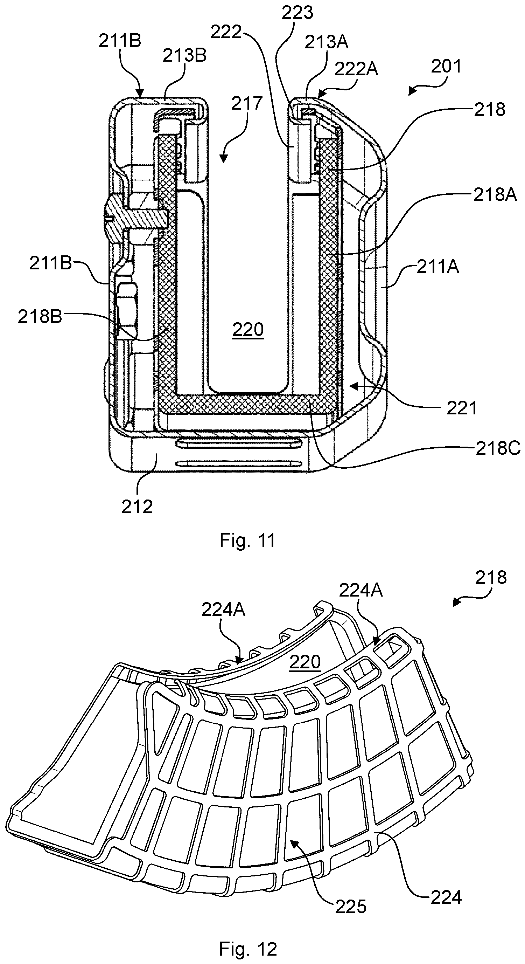

Die Filterwand 218 hat die Eigenschaft, dass sie aus dem Filtergehäuse 201 herausnehmbar und austauschbar ist. Die Fig. 12 zeigt die aus dem Gehäuse 201 herausgenommene Filterwand 218. Sie umfasst ein Gitter 224, das der Halterung und Versteifung des luftdurchlässigen Filtermediums 225 dient. Innere Gitterkanten 224A sind in Richtung des Innenraums 220 nach innen gebogen und bilden so einen Halteabschnitt zum Halten der Filterwand 218 an dem Gehäuse 201.

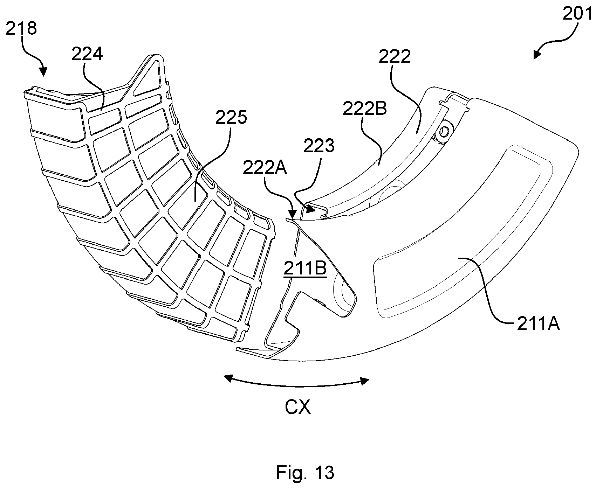

Die Fig. 13 zeigt, wie die Filterwand 218 in das Gehäuse 201 eingeführt und herausgenommen werden kann. Beide Schritte erfolgen durch eine Bewegung der Filterwand 218 relativ zum Gehäuse 201 entlang der Umfänglichen Erstreckungsrichtung CX.

Zur Aufnahme und Halterung der Filterwand 218 weist das Gehäuse 201 einen Befestigungsabschnitt 222 mit einem Umfangsführungskanal 223 auf. Der Befestigungsabschnitt 222 ist an einem radialen inneren Abschnitt der Seitenwände 211A, 211B durch eine Verformung der Seitenwände 211A, 211B gebildet. Der Befestigungsabschnitt 222 ist somit einteilig mit dem Gehäuse 201 gebildet.

Der Befestigungsabschnitt 222 ist, wie in den Fig. 11 und 13 gezeigt, dadurch gebildet, dass die Endabschnitte 222A, 222B der Seitenwände 211A, 211B in Richtung des Innenraums 220 axial zueinander gebogen sind, sodass sich die gebogenen Abschnitte 222A, 222B im Wesentlichen entlang der Umfangsrichtung CX erstrecken. Die gebogenen Abschnitte 222A, 222B (Innenumfangswandabschnitte) weisen widerum einen gekrümmten Abschnitt auf, der den Umfangsführungskanal 223 bildet. Der Umfangsführungskanal 223 verläuft gegenüber von den ersten und zweiten Seitenwänden 211A, 211B und hat Dimensionen, die ein Einführen des Halteabschnitts der Filterwand 218 ermöglichen.

Die Filterwand 218 kann aus dem Gehäuse 201 herausgenommen werden, und durch eine sauberere, neue Filterwand 218 ersetzt werden. Dies erfolgt mit geringem Aufwand, weil die Filterwand 218 entlang des Umfangsführungskanals 223 in das Gehäuse 201 eingeführt werden kann und mit dem Umfangsführungskanal 223 im Innenraum 220 gehalten werden kann.

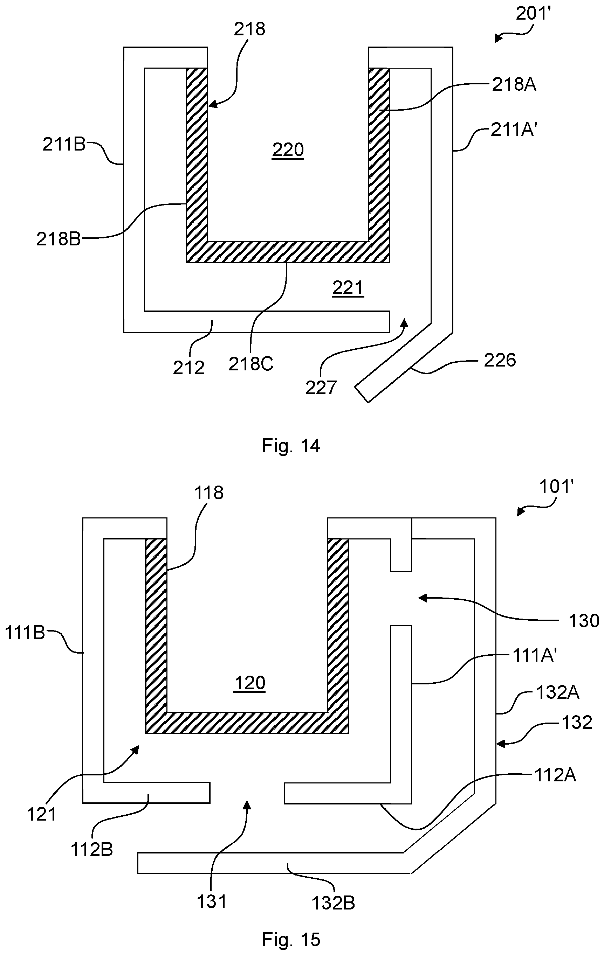

Die Fig. 14 zeigt eine Schnittansicht einer Abwandlung des Gehäuses 201 des Bremsstaubpartikelfilters gemäß Fig. 10. Das in der Fig. 14 gezeigte Gehäuse 201' unterscheidet sich von dem Gehäuse 201 lediglich dadurch, dass in der Umfangswand 212 eine Öffnung 227 vorgesehen ist, durch die die gereinigte Luft (Reinluft) aus der Kammer 221 austreten kann. Um zu verhindern, dass durch die Öffnung 227 Dreck und Wasser in die Kammer 221 gelangt, weist die Seitenwand 211A' eine Schutzwand 226 auf, die einteilig mit der Seitenwand 211A' gebildet ist. Die Schutzwand 226 ist ein angewinkelter Abschnitt der Seitenwand 211A', der über die Öffnung 227 ragt und diese somit vor Dreck und Flüssigkeit schützt.

Die Fig. 15 zeigt eine Schnittansicht einer Abwandlung des Gehäuses 101 eines Bremsstaubpartikelfilters gemäß Fig. 7. Das Gehäuse 101' des in der Fig. 15 gezeigten Bremsstaubpartikelfilters unterscheidet sich von dem Gehäuse 101 lediglich dadurch, dass in der Seitenwand 111A' eine Öffnung 130 vorgesehen ist, durch die die gereinigte Luft (Reinluft) aus der Kammer 121 austreten kann. Eine weitere Öffnung 131 bildet der Abstand zwischen den Umfangswandabschnitten 112A, 122B. Um zu verhindern, dass durch die Öffnungen 130, 131 Dreck und Wasser in die Kammer 121 gelangt, ist um die Seitenwand 111A' herum eine Schutzwand 132 vorgesehen. Die Schutzwand 132 umfasst einen Schutzwandseitenabschnitt 132A, der beabstandet gegenüber von der Seitenwand 111A' liegt und somit die Öffnung 130 verdeckt, sowie einen Schutzwandumfangsabschnitt 132B auf, der im Winkel zum Schutzwandseitenabschnitt 132A steht, sich in Umfangsrichtung CX erstreckt und die Öffnung 131 abdeckt. Die Schutzwand 132 ragt somit über beide Öffnungen 130, 131 und schützt diese somit vor Dreck und Flüssigkeit.

Obwohl die Erfindung vorliegend anhand bevorzugter Ausführungsbeispiele beschrieben wurde, ist sie darauf keineswegs beschränkt, sondern vielfältig modifizierbar. Zum Beispiel kann der das Gehäuse 101' des Filters aus Fig. 15 hinsichtlich der Öffnung 130 und der Schutzwand 132 symmetrisch ausgebildet sein. Das heißt, dass auch die zweite Seitenwand 111B eine Öffnung 130 und eine ihr gegenüberliegende Schutzwand 132 aufweisen kann. Darüber hinaus kann auch die Filterwand 118 aus dem Filtergehäuse 101 herausnehmbar vorgesehen sein. Die Fig. 14 und 15 sind schematische Darstellungen, in denen die Befestigung der Filterwand an dem Gehäuse zwar nicht explizit gezeigt ist, aber zum Beispiel so wie in den Fig. 10 bis 13 erfolgen kann.

### Verwendete Bezugszeichen:

- 1: Bremsstaubpartikelfilter
- 2: Bremsscheibe
- 2A, 2B: Bremsscheibenreibfläche
- 2C: Ausströmöffnung
- 2D: Bremsscheibenkante
- 2E: Befestigungsteller
- 2F: Befestigungsöffnung
- 3: Bremssattelhalter
- 4: Bremssattel
- 5: Bremsbelag
- 6: Bremssattelträger
- 8: Bremshydraulik
- 9: schwimmende Lagerung
- 10: Filtergehäuse
- 11A: (äußere) Seitenwand
- 11B: (innere) Seitenwand
- 12: (äußere) Umfangswand
- 13A: (innerer außenliegende) Umfangskantenabschnitt
- 13B: (innerer innenliegende) Umfangskantenabschnitt
- 14: Anschlusskontur
- 15: Spalt
- 16: Stirnwand
- 17: Schlitz
- 18: Zum Inneren des Filtergehäuses gezogener Bereich
- 20: Innenraum
- 20A: Rohluftseite
- 20B: Reinluftseite
- 100: Scheibenbremsenanordnung
- 101: Filtergehäuse
- 101': Filtergehäuse
- 111A: (äußere) Seitenwand
- 111A': (äußere) Seitenwand
- 111B: (innere) Seitenwand
- 112A: Umfangswandabschnitt
- 112B: Umfangswandabschnitt
- 116: Stirnwand
- 117: Schlitz
- 118: Filterwand
- 118A: Seitenabschnitt
- 118B: Seitenabschnitt
- 118C: Filterwandumfangsabschnitt
- 120: Innenraum
- 120A: Rohluftseite
- 120B: Reinluftseite
- 121: Kammer
- 124: Gitter
- 125: Filtermedium
- 130: Öffnung
- 131: Öffnung
- 132: Schutzwand
- 132A: Schutzwandseitenabschnitt
- 132B: Schutzwandumfangsabschnitt
- 201: Filtergehäuse
- 201': Filtergehäuse
- 211A: (äußere) Seitenwand
- 211A': (äußere) Seitenwand
- 211B: (innere) Seitenwand
- 212: (äußere) Umfangswand
- 216: Stirnwand
- 217: Schlitz
- 218: Filterwand
- 218A: Seitenabschnitt
- 218B: Seitenabschnitt
- 218C: Filterwandumfangsabschnitt
- 221: Kammer
- 222: Befestigungsabschnitt
- 222A: gebogener Abschnitt (Innenumfangswandabschnitt)
- 222B: gebogener Abschnitt (Innenumfangswandabschnitt)
- 223: Umfangsführungskanal
- 224: Gitter
- 224A: innere Gitterkante
- 225: Filtermedium
- 226: Schutzwand
- 227: Öffnung
- A: Drehachse
- AX: axiale Erstreckungsrichtung
- CX: umfängliche Erstreckungsrichtung
- DA: Abstand
- DB: Abstand
- F: Vorwärtsfahrrichtung
- R: Vorwärtsdrehrichtung
- RI: Innenradius
- RO: Außenradius
- RX: radiale Erstreckungsrichtung
- W: Breite

## Patentansprüche

1. Bremsstaubpartikelfilter (1) für eine Scheibenbremsenanordnung (100) mit einer Bremsscheibe (2) und einem Bremssattel (4), wobei der Bremsstaubpartikelfilter (1) umfasst:
ein Filtergehäuse (101, 201) mit einer ersten Seitenwand (111A, 211A) und einer zweiten gegenüberliegenden Seitenwand (111B, 211B), welche mit Hilfe eines zumindest teilumfänglich verlaufenden Umfangswandabschnitts (112A, 112B) und/oder einer Stirnwand (116, 216) miteinander verbunden sind, wobei sich ein Innenraum (120, 220) des Filtergehäuses (101, 201) von einer in einem Montagezustand dem Bremssattel (4) zugewandten, insbesondere offenen, Seite entlang der Seitenwände (111A, 111B) und/oder des Umfangswandabschnitts (112A, 112B) zu der Stirnwand (116, 216) erstreckt;
wobei das Filtergehäuse (101, 201) im Innenraum (120, 220) mindestens eine luftdurchlässige Filterwand (118, 218) mit einem Filterwandumfangsabschnitt (118C) umfasst, welcher radial beabstandet zu dem Umfangswandabschnitt (112A, 112B) vorliegt und den Innenraum (120, 220) des Filtergehäuses (101, 201) in eine Rohluftseite (120A, 220A) und eine Reinluftseite (120B, 220B) unterteilt, wobei die Reinluftseite (120B, 220B) sich zwischen dem Filterwandumfangsabschnitt (118C) und dem Umfangswandabschnitt (112A, 112B) erstreckt.

2. Bremsstaubpartikelfilter nach Anspruch 1, wobei die Filterwand (118, 218) zumindest einen Seitenabschnitt (118A, 118B, 218A, 218B) hat, der gegenüber einer der Seitenwände (111A, 111B) axial versetzt angeordnet ist, wobei die Reinluftseite (120B, 220B) sich ferner zwischen der einen der Seitenwände (111A, 111B) und dem Seitenabschnitt (118A, 118B, 218A, 218B) erstreckt.

3. Bremsstaubpartikelfilter nach Anspruch 1 oder 2, wobei das Filtergehäuse (101, 201) zwei Umfangswandabschnitte (112A, 112B) aufweist, wobei ein erster Umfangswandabschnitt (112A) sich axial von der ersten Seitenwand (111A, 211A) in Richtung der zweiten Seitenwand (111B, 211B) erstreckt und ein mit dem ersten Umfangswandabschnitt (112A) fluchtender zweiter Umfangswandabschnitt (112B) sich axial von der zweiten Seitenwand (111B, 211B) in Richtung der ersten Seitenwand (111A, 211A) erstreckt.

4. Bremsstaubpartikelfilter nach einem der Ansprüche 1 bis 3, wobei die luftdurchlässige Filterwand (118, 218) ein Filtermedium (125, 225) hält, insbesondere vollflächig mit dem Filtermedium (125, 225) bedeckt ist, wobei die Filterwand (118, 218) bevorzugt ein luftdurchlässiges Gitter (124, 224) umfasst.

5. Bremsstaubpartikelfilter nach einem der Ansprüche 1 bis 4, wobei der Umfangswandabschnitt (112A, 112B) und/oder eine der Seitenwände (111A, 111B, 211A, 22B) zumindest eine Öffnung (130, 131, 227) aufweist, die einen Austritt der Luft aus der Reinluftseite (120B, 220B) nach außerhalb des Filtergehäuses (101, 201) ermöglicht.

6. Bremsstaubpartikelfilter nach Anspruch 5, wobei das Filtergehäuse (101, 201) eine Schutzwand (132, 226) aufweist, die sich von einer der Seitenwände (111A, 111B, 211A, 211B) und/oder dem Umfangswandabschnitt (112A, 112B) erstreckt und derart orientiert ist, dass sie die durch die Öffnung (130, 131, 227) austretende Luft umleitet, insbesondere durch ein Labyrinth umleitet.

7. Bremsstaubpartikelfilter nach Anspruch 6, wobei die Schutzwand (132, 226) ein Teil einer der Seitenwände (111A, 111B, 211A, 211B) und/oder des Umfangswandabschnitts (112A, 112B) ist, der angewinkelt ist.

8. Bremsstaubpartikelfilter nach einem der Ansprüche 5 bis 7, wobei die Öffnung (130, 131, 227) in einem Benutzungszustand des Bremsstaubpartikelfilters (1) an einer Scheibenbremsenanordnung (100) nach unten gerichtet ist.

9. Bremsstaubpartikelfilter nach einem der Ansprüche 1 bis 8, wobei zumindest eine der Seitenwände (111A, 111B, 211A, 211B) und/oder der Umfangswandabschnitt (112A, 112B) luftdicht ausgeführt sind.

10. Bremsstaubpartikelfilter nach einem der Ansprüche 1 bis 9, wobei das Filtergehäuse (201) eine Umfangswand (212) aufweist, die den Umfangswandabschnitt (112A, 112B) umfasst, wobei die Umfangswand (212) die erste und die zweite Seitenwand (111A, 111B, 211A, 211B) miteinander verbindet, wobei die Filterwand (118, 218) der Umfangswand (212) zumindest teilweise gegenüberliegt, und wobei die Reinluftseite (120B, 220B) als eine Kammer (121, 221) ausgebildet ist, welche von der Filterwand (118, 218) und der Umfangswand (212) begrenzt ist.

11. Bremsstaubpartikelfilter nach einem der Ansprüche 1 bis 10, wobei das Filtergehäuse (201) zumindest einen von einer Seitenwand (111A,111B, 211A, 211B) erstreckenden Befestigungsabschnitt (222) aufweist, der dem Umfangswandabschnitt (112A, 112B) gegenüber angeordnet ist, wobei die Filterwand (118, 218) mittelbar oder unmittelbar mittels des Befestigungsabschnitts (222) herausnehmbar an dem Filtergehäuse (101, 201) gehalten ist, insbesondere anhand eines Umfangsführungskanals (223) des Befestigungsabschnitts (222).

12. Bremsstaubpartikelfilter nach Anspruch 11, wobei der Befestigungsabschnitt (222) einen sich radial innen von zumindest einer Seitenwand (111A, 111B, 211A, 211B) in Axialrichtung zu dem Innenraum (120, 220) erstreckenden Innenumfangswandabschnitt (222A, 222B) aufweist, der endständig den Umfangsführungskanal (223) aufweist, wobei der Umfangsführungskanal (223) bevorzugt als eine Umformung, insbesondere Bördelung, des Innenumfangswandabschnitt vorliegt.

13. Scheibenbremsenanordnung (100) mit einer Bremsscheibe (2), einem Bremssattel (4) und einem Bremsstaubpartikelfilter (1) nach einem der Ansprüche 1 - 12, wobei das Filtergehäuse (101, 201) die Bremsscheibe (2) in axialer Richtung überspannt.

14. Verwendung eines Bremsstaubpartikelfilters (1) nach einem der Ansprüche 1 - 12 zum Filtern von mit Bremsstaubpartikeln beladener Luft in oder an einer Scheibenbremsenanordnung (100).

15. Verfahren zum Filtern von mit Bremsstaubpartikeln beladener Luft in oder an einer Scheibenbremsenanordnung (100), welche eine in einer Drehrichtung (R) drehbaren Bremsscheibe (2), einen die Bremsscheibe (2) im Bereich einer Reibfläche umgreifenden Bremssattel (4), und mindestens einen Bremsbelag aufweist, insbesondere mit Hilfe eines Bremsstaubpartikelfilters (1) nach einem der Ansprüche 1 - 12, umfassend:
in einem in der Drehrichtung (R) dem Bremssattel (4) nachgelagerten Filtergehäuse (101, 201), welches die Bremsscheibe (2) randseitig und umfangsseitig umgreift:
Führen eines Luft-Bremsstaubpartikelstroms zunächst in Umfangsrichtung (CX) entlang einer Reibfläche der Bremsscheibe (2);
Führen des Luft-Bremsstaubpartikelstroms durch das Filtermedium (125, 225) der Filterwand (118, 218) von der Rohluftseite (120A, 220A) zur Reinluftseite (120B, 220B);
Aufnehmen der Bremsstaubpartikel des Luft-Bremsstaubpartikelstroms durch das durchströmte Filtermedium (125, 225).

16. Verfahren nach Anspruch 15, ferner umfassend: Führen des Luft-Bremsstaubpartikelstroms durch das Filtermedium (125, 225) der Filterwand (118, 218) von der Rohluftseite (120A, 220A) zur Reinluftseite (120B, 220B) basierend auf einem definierten Druckgradienten zwischen der Rohluftseite (120A, 220A) und der Reinluftseite (120B, 220B).

17. Verfahren nach Anspruch 15 oder 16, ferner umfassend: Auslassen der gefilterten Luft aus der Reinluftseite (120B, 220B) durch eine Öffnung (130, 131, 227) in der Umfangswand (212) und/oder in einer der Seitenwände (111A, 111B, 211A, 211B).
